(19) Europäisches Patentamt
European Patent Office
Office européen des brevets

(11) **EP 4 361 672 A1**

(12) **DEMANDE DE BREVET EUROPEEN**

(43) Date de publication:
**01.05.2024 Bulletin 2024/18**

(21) Numéro de dépôt: **23203406.6**

(22) Date de dépôt: **13.10.2023**

(51) Classification Internationale des Brevets (IPC):
**G01S 7/4914** (2020.01)  **G01S 7/493** (2006.01)
**G01S 17/894** (2020.01)

(52) Classification Coopérative des Brevets (CPC):
**G01S 17/894; G01S 7/4914; G01S 7/493**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **27.10.2022 FR 2211205**

(71) Demandeur: **STMicroelectronics International N.V.**
**1228 Plan-les-Ouates, Geneva (CH)**

(72) Inventeurs:
• **TEYSSIER, Jeremie**
 **38000 GRENOBLE (FR)**
• **TUBERT, Cedric**
 **38120 SAINT-EGREVE (FR)**
• **AUGEY, Thibault**
 **38100 GRENOBLE (FR)**
• **REBIERE, Valentin**
 **38000 GRENOBLE (FR)**
• **BOUCHET, Thomas**
 **38120 FONTANIL-CORNILLON (FR)**

(74) Mandataire: **Cabinet Beaumont**
 **4, Place Robert Schuman**
 **B.P. 1529**
 **38025 Grenoble Cedex 1 (FR)**

(54) **PROCEDE ET SYSTEME DE DETERMINATION D'UNE IMAGE DE PROFONDEUR D'UNE SCENE**

(57) La présente description concerne un système (1) de détermination d'une image de profondeur d'une scène (2), configuré pour projeter un motif de taches (18) sur la scène et acquérir une image de la scène ; déterminer les valeurs I et Q des pixels de l'image ; déterminer, pour chaque pixel, au moins une valeur de confiance pour former une image de confiance ; déterminer les maxima locaux de l'image de confiance dont la valeur de confiance est supérieure à un premier seuil ; sélectionner, pour chaque maximum local, des pixels autour du maximum local dont la valeur de confiance est supérieure à un deuxième seuil ; déterminer une valeur Imoy égale à la moyenne des valeurs I des pixels sélectionnés et une valeur Qmoy égale à la moyenne des valeurs Q des pixels sélectionnés ; et déterminer la profondeur du maximum local à partir des valeurs Imoy et Qmoy.

Fig 2

EP 4 361 672 A1

## Description

La présente demande de brevet revendique la priorité de la demande de brevet français FR22/11205 qui sera considérée comme faisant partie intégrante de la présente description.

Domaine technique

La présente demande concerne le domaine des procédés et des systèmes de détermination d'une image de profondeur d'une scène.

Technique antérieure

Des systèmes d'acquisition d'images aptes à acquérir des informations de profondeur ont été proposés. Par exemple, des détecteurs de temps de vol indirects (iToF) agissent pour émettre un signal lumineux vers une scène, puis pour détecter le signal lumineux en retour réfléchi par des objets de la scène. Par l'évaluation du déphasage entre le signal lumineux émis et le signal lumineux réfléchi, on peut estimer la distance de la scène par rapport au système d'acquisition d'images.

Il est souhaitable de disposer d'un système d'acquisition d'une image de profondeur par de temps de vol indirect adapté à estimer la distance de la scène par rapport au système d'acquisition d'images avec une précision élevée.

Résumé de l'invention

Il existe un besoin de pallier tout ou partie des inconvénients des systèmes d'acquisition d'une image de profondeur par de temps de vol indirect connus.

Un mode de réalisation prévoit un procédé de détermination d'une image de profondeur d'une scène, comprenant les étapes suivantes :

a) projeter un motif de taches sur la scène et acquérir une image de la scène, chaque pixel de l'image étant obtenu à partir de charges électriques accumulées pendant des phases de collecte ;
b) déterminer les valeurs I et Q des pixels de l'image ;
c) déterminer, pour chaque pixel de l'image, au moins une valeur de confiance qui est fonction d'au moins une partie des charges accumulées, pour former une image de confiance ou des images de confiance ;
d) déterminer les maxima locaux de l'image de confiance ou de l'une des images de confiance dont la valeur de confiance, de la même image de confiance ou d'une autre des images de confiance, est supérieure à un premier seuil ;
e) sélectionner, pour chaque maximum local déterminé à l'étape d), des pixels autour du maximum local dont la valeur de confiance, de l'image de confiance utilisée pour déterminer les maxima locaux ou d'une autre des images de confiance, est supérieure à un deuxième seuil ;
f) déterminer, pour chaque maximum local déterminé à l'étape d), une valeur Imoy égale à la moyenne des valeurs I des pixels sélectionnés et une valeur Qmoy égale à la moyenne des valeurs Q des pixels sélectionnés ; et
g) déterminer, pour chaque maximum local, la profondeur du maximum local à partir des valeurs Imoy et Qmoy.

Un mode de réalisation prévoit également un système de détermination d'une image de profondeur d'une scène, le système étant configuré pour :

a) projeter un motif de taches sur la scène et acquérir une image de la scène, chaque pixel de l'image étant obtenu à partir de charges électriques accumulées pendant des phases de collecte ;
b) déterminer les valeurs I et Q des pixels de l'image ;
c) déterminer, pour chaque pixel de l'image, au moins une valeur de confiance qui est fonction d'au moins une partie des charges accumulées, pour former une image de confiance ou des images de confiance ;
d) déterminer les maxima locaux de l'image de confiance dont la valeur de confiance, de la même image de confiance ou d'une autre des images de confiance, est supérieure à un premier seuil ;
e) sélectionner, pour chaque maximum local déterminé à l'étape d), des pixels autour du maximum local dont la valeur de confiance, de l'image de confiance utilisée pour déterminer les maxima locaux ou d'une autre des images de confiance, est supérieure à un deuxième seuil ;
f) déterminer, pour chaque maximum local déterminé à l'étape d), une valeur Imoy égale à la moyenne des valeurs I des pixels sélectionnés et une valeur Qmoy égale à la moyenne des valeurs Q des pixels sélectionnés ; et
g) déterminer, pour chaque maximum local, la profondeur du maximum local à partir des valeurs Imoy et Qmoy.

Selon un mode de réalisation, le premier seuil est supérieur strictement au deuxième seuil.

Selon un mode de réalisation, l'étape d) comprend le déplacement d'une première fenêtre (F1) sur l'image de confiance, et, pour chaque position de la première fenêtre sur l'image de confiance, la comparaison de la valeur d'un pixel de l'image de confiance situé dans la première fenêtre et qui n'est pas sur le bord de la première fenêtre, aux valeurs des autres pixels de l'image de confiance situés de la première fenêtre.

Selon un mode de réalisation, l'étape d) comprend, dans le cas où la valeur dudit pixel est supérieure aux valeurs des autres pixels de l'image de confiance situés de la première fenêtre, la comparaison de la valeur dudit pixel, de la même image de confiance ou d'une autre des images de confiance, au premier seuil.

Selon un mode de réalisation, l'étape e) comprend, pour chaque maximum local, le placement d'une deuxième fenêtre sur l'image de confiance utilisée pour déterminer les maxima locaux ou sur une autre des images de confiance, la deuxième fenêtre contenant le maximum local, et la comparaison au deuxième seuil de la valeur de chaque pixel de l'image de confiance situé dans la deuxième fenêtre, autre que le maximum local.

Selon un mode de réalisation, la deuxième fenêtre est plus grande que la première fenêtre ou égale à la première fenêtre.

Selon un mode de réalisation, le système comprend un dispositif d'illumination de la scène avec le motif de taches, et un capteur d'images pour acquérir l'image de la scène.

Selon un mode de réalisation, le système correspond à un détecteur de temps de vol indirect.

Un mode de réalisation prévoit également un programme d'ordinateur conçu pour mettre en oeuvre le procédé décrit précédemment.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente schématiquement un mode de réalisation d'un système d'acquisition d'une image de profondeur par de temps de vol indirect ;

la figure 2 représente schématiquement un mode de réalisation d'un système d'acquisition d'une image de profondeur par de temps de vol indirect mettant en oeuvre un motif de taches lumineuses ;

la figure 3 est un schéma par blocs d'un mode de réalisation d'un procédé de fourniture d'une carte de profondeur d'une scène ;

la figure 4 est un graphique illustrant un exemple d'intensité lumineuse d'un signal lumineux émis et renvoyé selon un mode de réalisation ;

la figure 5 est un exemple d'image de confiance ;

la figure 6 est un exemple d'image de confiance sur laquelle sont indiquées les maxima locaux ;

la figure 7 est un exemple de masque de sélection ; et

la figure 8 représente, de façon partielle et schématique, un mode de réalisation d'un module de traitement du système de la figure 1.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les systèmes électroniques usuels comprenant un capteur temps de vol indirect, appelé système d'imagerie iToF par la suite, n'ont pas été détaillés, les modes de réalisation décrits étant compatibles avec ces systèmes usuels.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à une image dans une position normale d'observation.

Sauf précision contraire, les expressions "environ", "approximativement", "sensiblement", et "de l'ordre de" signifient à 10 % près, de préférence à 5 % près.

Le principe de temps de vol indirect consiste à mesurer une distance par rapport à un objet en mesurant un retard de phase entre une onde lumineuse émise et une onde lumineuse réfléchie par l'objet.

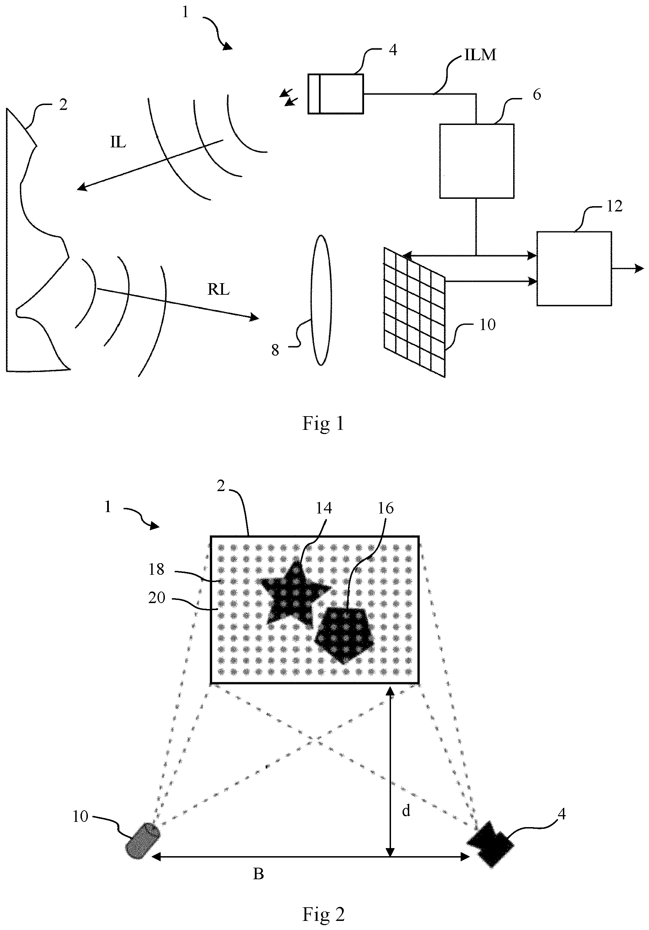

La figure 1 illustre de façon schématique un mode de réalisation d'un système d'imagerie iToF 1, qui peut être utilisé pour fournir une mesure de distance d'une scène 2.

Le système d'imagerie iToF 1 comprend :

- un dispositif d'éclairage 4 ;
- un module de commande 6 du dispositif d'éclairage 4 configuré pour commander le dispositif d'éclairage 4 pour éclairer la scène 2 de manière active avec un signal lumineux infrarouge incident IL modulé en amplitude par un signal de modulation ILM, le signal lumineux incident IL modulé en amplitude étant réfléchi par la scène 2 en un signal lumineux réfléchi RL ;
- une lentille 8 de collecte le signal lumineux réfléchi RL formant une image de la scène 2 ;
- un capteur d'images 10 à matrice de pixels configuré pour faire l'acquisition de l'image de la scène 2 et commandé par le module de commande 6, chaque pixel du capteur d'images 10 étant configuré pour fournir un signal électrique, appelé valeur de pixel par la suite, représentatif du signal lumineux réfléchi RL capté par ce pixel ; et
- un module de traitement 12 des images acquises par le capteur d'images 10.

Selon un mode de réalisation, le capteur d'images 10 peut comprendre un circuit électronique dans lequel sont formés les pixels et le module de traitement 12 peut également faire partie de ce circuit électronique.

De façon générale, pour un fonctionnement en temps de vol indirect (iToF), le module de traitement 12 corrèle le signal lumineux réfléchi RL avec un signal de démodulation pour fournir une valeur de composante en phase ("valeur I") et une valeur de composante en quadrature ("valeur Q") pour chaque pixel, ce que l'on appelle les valeurs I et Q. A partir des valeurs I et Q pour chaque pixel, le module de traitement 12 détermine une valeur de retard de phase $\Phi$, également appelé déphasage, pour chaque pixel, ce qui donne une image de phase. A partir de l'image de phase, le module de traitement 12 peut déterminer une valeur de profondeur d pour chaque pixel, ce qui donne une image de profondeur.

La figure 2 illustre schématiquement le principe de la mesure de distance par de temps de vol indirect par éclairage de type structuré. Le dispositif d'éclairage 4 est configuré pour éclairer la scène 2 comprenant des objets 14 et 16, avec un motif de taches (en anglais spots) lumineuses, également appelé motif de points lumineux. Le capteur d'images 10 fait l'acquisition d'une image du motif de taches lumineuses sur la scène 2. Le motif de taches lumineuses projetés sur la scène 2 par le dispositif d'éclairage 4 résulte en un motif correspondant de taches lumineuses dans l'image acquise par les pixels du capteur d'image 10.

Les taches lumineuses apparaissent dans l'image acquise par le capteur d'images 10 sous la forme d'un motif lumineux spatial comprenant des zones de haute intensité 18 (les taches lumineuses proprement dites) et des zones de faible intensité 20. Le dispositif d'éclairage 4 et le capteur d'images 10 sont distants l'un de l'autre d'une distance B. Cette distance B est appelée ligne de base. La scène 2 présente une distance d par rapport à la ligne de base B. Plus précisément, chaque objet 14, 16 ou point objet dans la scène 2 a une distance individuelle d par rapport à la ligne de base B. L'image de profondeur de la scène fournie par le système d'imagerie iToF 1 définit une valeur de profondeur pour chaque pixel de l'image de profondeur et fournit ainsi des informations de profondeur de la scène 2 et des objets 14, 16.

Typiquement, le motif de taches lumineuses 14 projetées sur la scène 2 peut résulter en un motif correspondant de taches lumineuses capturées sur les pixels du capteur d'image 10. En d'autres termes, des régions de pixel de taches peuvent être présentes parmi la pluralité de pixels de l'image acquise et des régions de pixel de vallée peuvent être présentes parmi la pluralité de pixels de l'image acquise. Les régions de pixel de tache de l'image acquise peuvent inclure des contributions de signal provenant de la lumière réfléchie par la scène 2 mais également provenant d'une lumière d'arrière-plan, et/ou d'une interférence à trajets multiples. La région de pixel de vallée de l'image acquise peut inclure des contributions de signal provenant d'une lumière d'arrière-plan et/ou d'une interférence à trajets multiples.

Par exemple, le dispositif d'éclairage 4 peut produire de 200 à 2000 taches 18 sur la scène 2, par exemple environ 1000 taches 18 sur la scène 2. Les taches lumineuses peuvent avoir une forme de cercle ou de rectangle/carré ou toute autre forme régulière ou irrégulière. Le motif lumineux de taches peut être un motif en grille ou un motif en ligne ou un motif irrégulier. De préférence, le dispositif d'éclairage 4 est configuré pour que chaque tache 18 présente une intensité maximale en son centre.

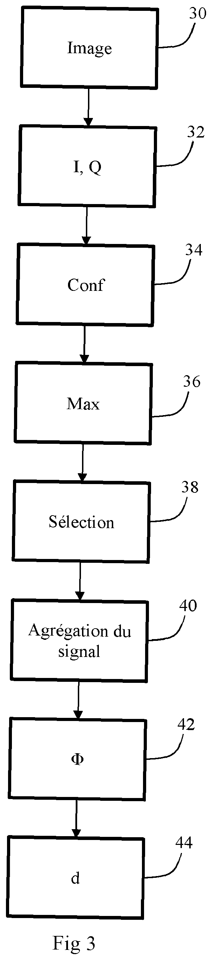

La figure 3 est un schéma par blocs d'un mode de réalisation d'un procédé de détermination d'une image de profondeur mis en oeuvre par le système d'imagerie iToF.

A l'étape 30 (Image), des données d'image brutes sont reçues par le capteur d'image 10.

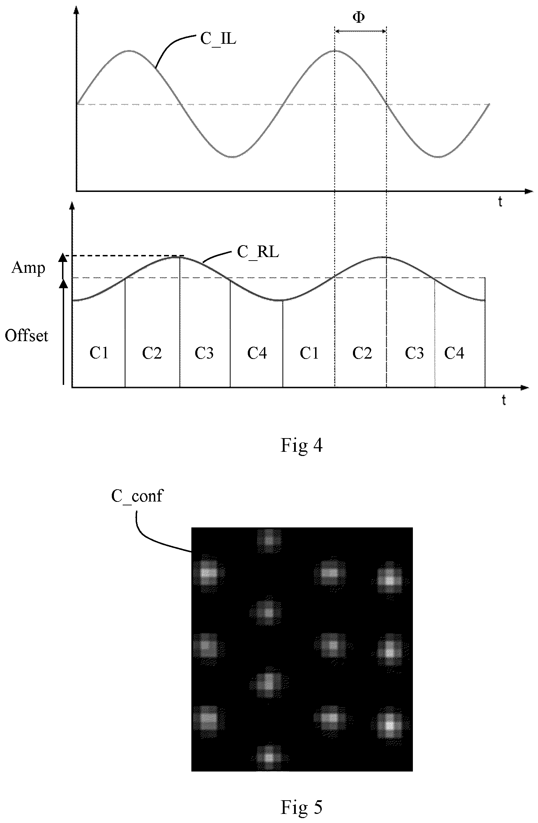

La figure 4 est un graphique représentant, par une courbe C_IL, un exemple d'évolution en fonction du temps de l'intensité lumineuse du signal lumineux incident IL modulé en amplitude émis par le dispositif d'éclairage 4 vers la scène 2, et, par une courbe C_RL, un exemple d'évolution en fonction du temps de l'intensité lumineuse du signal lumineux réfléchi RL reçu par l'un des pixels du capteur d'image 10. Bien que, pour simplifier la comparaison, ces signaux soient représentés en figure 4 comme ayant sensiblement la même intensité, en pratique le signal lumineux réfléchi RL reçu par chaque pixel est susceptible d'être notablement moins intense que le signal lumineux incident IL. Dans l'exemple de la figure 4, le signal lumineux incident IL est modulé en amplitude par un signal de modulation ILM correspondant à un signal sinusoïdal de période T et de fréquence fmod. Chacune de l'intensité lumineuse du signal lumineux incident IL et de l'intensité lumineuse du signal lumineux réfléchi RL a donc la forme d'une onde sinusoïdale de période T. Toutefois, dans des variantes de réalisation, elle pourrait avoir une forme périodique différente, par exemple constituée d'une somme d'ondes sinusoïdales, de forme triangulaire, ou en créneaux. Comme cela apparaît sur la figure 4, le signal lumineux reçu RL présente une valeur moyenne Offset non nulle et une amplitude maximale Amp par rapport à cette valeur moyenne.

Le déphasage $\Phi$ est par exemple estimé à partir d'un échantillonnage, pour chaque pixel du capteur d'images 10, du signal lumineux réfléchi RL capté par le pixel pendant au moins trois fenêtres d'échantillonnage distinctes, de préférence pendant quatre fenêtres d'échantillonnage distinctes, pendant chaque période T du signal lumineux réfléchi RL. A titre d'exemple, en figure 4, on a illustré l'acquisition de quatre échantillons par période.

Les échantillons de chaque fenêtre d'échantillonnage sont par exemple intégrés sur un grand nombre de périodes par exemple sur environ 100000 périodes, ou plus généralement entre 10000 et 10 millions de périodes. Chaque fenêtre d'échantillonnage a par exemple une durée allant jusqu'à un quart de la période du signal lumineux. Ces fenêtres d'échantillonnage sont nommées C1, C2, C3, et C4 en figure 4, et dans l'exemple de la figure 4, chaque fenêtre d'échantillonnage est d'une même durée et les quatre fenêtres d'échantillonnage ont un temps de cycle total égal à la période du signal lumineux. Plus généralement, il peut, ou non, y avoir un intervalle de temps séparant une fenêtre d'échantillonnage de la suivante et, dans certains cas, il pourrait y avoir un chevauchement entre les fenêtres d'échantillonnage. Chaque fenêtre d'échantillonnage a par exemple une durée comprise entre 15 % et 35 % de la période du signal lumineux dans le cas d'un pixel captant quatre échantillons par période. Chaque fenêtre d'échantillonnage a par exemple une durée comprise entre 25 % et 40 % de la période du signal lumineux dans le cas d'un pixel captant trois échantillons par période. Le minutage des fenêtres d'échantillonnage C1 à C4 est commandé de manière à être synchronisé avec le minutage du signal lumineux incident IL.

Selon un mode de réalisation, la fenêtre d'échantillonnage C1 est déphasée de 0° par rapport au signal de modulation ILM. Pendant la fenêtre d'échantillonnage C1, chaque pixel du capteur d'image 10 accumule une charge électrique Q1 qui dépend de la quantité de lumière reçue par le pixel pendant la fenêtre d'échantillonnage C1. La fenêtre d'échantillonnage C2 est déphasé de 90° par rapport au signal de modulation ILM. Pendant la fenêtre d'échantillonnage C2, chaque pixel du capteur d'image 10 accumule une charge électrique Q2 qui dépend de la quantité de lumière reçue par le pixel pendant la fenêtre d'échantillonnage C2. La fenêtre d'échantillonnage C3 est déphasé de 180° par rapport au signal de modulation ILM. Pendant la fenêtre d'échantillonnage C3, chaque pixel du capteur d'image 10 accumule une charge électrique Q3 en fonction d'une quantité de lumière reçue par le pixel pendant la fenêtre d'échantillonnage C3. La fenêtre d'échantillonnage C4 est déphasé de 270° par rapport au signal de modulation ILM. Pendant la fenêtre d'échantillonnage C4, chaque pixel du capteur d'image 10 accumule une charge électrique Q4 qui dépend de la quantité de lumière reçue par le pixel pendant la fenêtre d'échantillonnage C4. Le procédé se poursuit à l'étape 32.

La détermination des charges électriques Q1, Q2, Q3, et Q4 peut être réalisées selon un autre procédé d'échantillonnage que celui décrit précédemment. Une autre technique basée sur la détection de quatre échantillons par période est décrite plus en détail dans la publication de R. Lange et de P. Seitz intitulée "Solid-state TOF range caméra", IEEE J. on Quantum Electronics, vol. 37, No.3, March 2001, dont le contenu sera considéré comme faisant partie intégrante de la présente description dans la mesure permise par la loi

A l'étape 32 (I, Q), les valeurs I et Q sont déterminées pour chaque pixel à partir des données d'image brutes fournies par le capteur d'images 10.

Selon un mode de réalisation, la composante en quadrature Q est donnée par la relation suivante :

[Math 1]

$$Q = Q3 - Q4$$

Selon un mode de réalisation, la composante en phase I est donnée par la relation suivante :

[Math 2]

$$I=Q1-Q2$$

Le procédé se poursuit à l'étape 34.

A l'étape 34 (Conf), une carte de confiance, également appelée image de confiance, est déterminée. Selon un mode de réalisation, une valeur de confiance conf est déterminée pour chaque pixel à partir des valeurs I et Q du pixel. De façon générale, la valeur de confiance conf est une fonction à la fois de la valeur I et de la valeur Q du pixel.

La figure 5 est un exemple de carte de confiance C_conf obtenue à l'étape 34.

Selon un mode de réalisation, la valeur de confiance Conf correspond à l'amplitude AmpL1 dite selon la norme L1 du signal lumineux réfléchi RL et est donnée par la relation suivante :

[Math 3]

$$\text{Conf}=\text{AmpL1}=\sqrt{I^2+Q^2}$$

Selon un autre mode de réalisation, la valeur de confiance Conf correspond à l'amplitude AmpL2 dite selon la norme L2 du signal lumineux réfléchi RL et est donnée par la relation suivante :

[Math 4]

$$\text{conf}=\text{AmpL2}=|I|+|Q|$$

Selon un autre mode de réalisation, la valeur de confiance Conf correspond à une fonction de l'amplitude Amp, correspondant à AmpL1 ou AmpL2, et de la valeur Offset du pixel, et est par exemple égal au carré du rapport signal sur bruit SNR, par exemple selon la relation suivante :

[Math 5]

$$\text{conf}=\text{SNR}^2=\frac{\text{Amp}^2}{\text{Offset}}$$

où la valeur Offset est par exemple donnée par la relation suivante dans le cas de quatre échantillonnages par période :

[Math 6]

$$\text{Offset}=Q1+Q2+Q3+Q4$$

A titre de variante, dans le cas où l'échantillonnage est réalisé par demi-période, la valeur Offset est égale à la somme de Q1 et de Q3 et est aussi égale à la somme de Q2 et Q4.

Selon un autre mode de réalisation, la valeur de confiance Conf correspond à tout autre estimateur du rapport signal sur bruit SNR du pixel.

Le procédé se poursuit à l'étape 36.

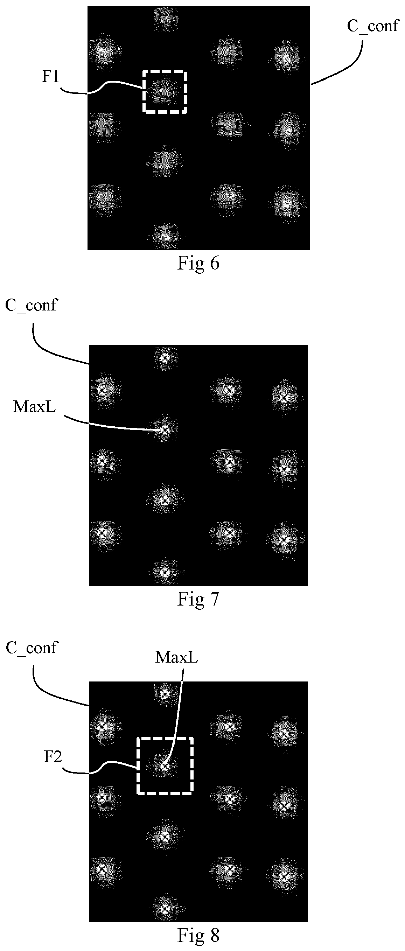

A l'étape 36 (Max), un procédé de détermination de maxima locaux de la carte de confiance est mis en oeuvre et est illustré par la figure 6. Selon un mode de réalisation, le procédé consiste à faire glisser, sur la carte de confiance, une première fenêtre F1, dont le contour est indiquée en traits pointillés en figure 6, sur la carte de confiance C_conf, et à comparer la valeur d'un pixel, appelé pixel testé, de la carte de confiance situé dans la première fenêtre F1 et qui n'est pas sur le bord de la première fenêtre F1, aux valeurs des autres pixels de la carte de confiance situés dans la première fenêtre F1. Selon un mode de réalisation, la première fenêtre F1 correspond à un groupe de pixels jointifs. Selon un mode de réalisation, le pixel testé est le pixel au centre de la première fenêtre F1. Selon un mode de réalisation, la première fenêtre F1 est une fenêtre carrée. De façon générale, la taille de la première fenêtre F1 dépend de la distance entre les taches 18. Selon un mode de réalisation, la première fenêtre est une fenêtre carrée de 3 à 7 pixels de côté, de préférence à 5 pixels de côté.

Si la valeur du pixel testé n'est pas supérieure à toutes les valeurs des autres pixels de la première fenêtre F1, la première fenêtre F1 est déplacée à la position suivante. Si la valeur du pixel testé est supérieure à toutes les valeurs des autres pixels de la première fenêtre F1, et si la valeur du pixel testé est supérieure à un premier seuil, le pixel testé de la première fenêtre F1 est considéré comme un maximum local de la carte de confiance C_conf et la position de ce maximum local dans la carte de confiance C_conf est mémorisée. La première fenêtre F1 est déplacée à la position suivante.

L'étape 36 est terminée lorsque la première fenêtre F1 a été déplacée sur la carte de confiance C_conf pour couvrir la totalité de la carte de confiance C_conf. Le procédé se poursuit à l'étape 38.

La figure 7 représente la carte de confiance C_Conf de la figure 5 sur laquelle chaque maximum local MaxL obtenu à l'étape 36 est représenté par un pixel blanc avec une croix.

A l'étape 38 (Sélection), un procédé de sélection de pixels de la carte de confiance C_conf est mis en oeuvre pour chaque maximum local MaxL déterminé à l'étape 36 et est illustré par la figure 8. Selon un mode de réalisation, pour chaque maximum local MaxL, une étape de sélection de pixels de la carte de confiance C_conf voisins du maximum local MaxL est mise en oeuvre. Selon un mode de réalisation, pour chaque maximum local MaxL, il est appliqué sur la carte de confiance une deuxième fenêtre F2, dont le contour est indiquée en traits pointillés en figure 8, contenant le maximum local MaxL, le maximum local n'étant pas sur le bord de la deuxième fenêtre F2, et la valeur de chaque pixel de la carte de confiance situé dans la deuxième fenêtre F2, autre que le maximum local MaxL, est comparé à un deuxième seuil. Selon un mode de réalisation, le premier seuil et le deuxième seuil sont déterminés par des essais. Le deuxième seuil est inférieur strictement au premier seuil. Selon un mode de réalisation, la deuxième fenêtre F2 correspond à un groupe de pixels jointifs de la carte de confiance. Selon un mode de réalisation, la deuxième fenêtre F2 est plus grande que la première fenêtre F1. Selon un mode de réalisation, la deuxième fenêtre F2 est centré sur le maximum local MaxL. Selon un mode de réalisation, la deuxième fenêtre F2 est une fenêtre carrée. De façon générale, comme pour la première fenêtre F1, la taille de la deuxième fenêtre F2 dépend de la distance entre les taches 18. Selon un mode de réalisation, la première fenêtre est une fenêtre carrée de 1 à 31 pixels de côté, de préférence de 5 à 9 pixels de côté, plus préférentiellement à 7 pixels de côté. Pour chaque maximum local MaxL, l'ensemble de pixels comprenant le maximum local MaxL et les pixels de la deuxième fenêtre F2 qui sont sélectionnés à l'étape 38 forment une zone de confiance. Les positions des pixels de chaque zone de confiance sont mémorisées. Le procédé se poursuit à l'étape 40.

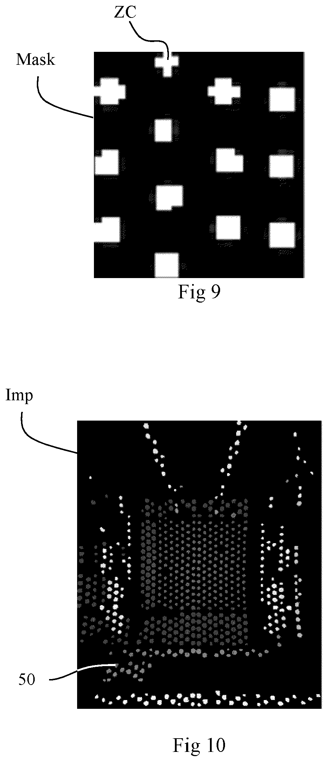

La figure 9 représente une image Mask de même dimension que la carte de confiance de la figure 5 et sur laquelle chaque zone de confiance ZC déterminée à l'étape 38 est représenté par des pixels blancs, les autres pixels de l'image étant noirs.

Dans le mode de réalisation décrit précédemment, la même carte de confiance est utilisée à l'étape 36 pour la comparaison au premier seuil, à l'étape 36 pour la détermination des maxima locaux, et à l'étape 38 pour la comparaison au deuxième seuil. Selon un autre mode de réalisation, des cartes de confiance différentes peuvent être utilisées à l'étape 36 pour la comparaison au premier seuil, à l'étape 36 pour la détermination des maxima locaux, et/ou à l'étape 38 pour la comparaison au deuxième seuil. De préférence, la même carte de confiance est utilisée à l'étape 36 pour la comparaison au premier seuil et à l'étape 38 pour la comparaison au deuxième seuil. A titre d'exemple, la carte de confiance obtenue selon la relation Math 3 peut être utilisée à l'étape 36 pour la comparaison au premier seuil, la carte de confiance obtenue selon la relation Math 5 peut être utilisée à l'étape 36 pour la détermination des maxima locaux, et la carte de confiance obtenue selon la relation Math 3 peut être utilisée à l'étape 38 pour la comparaison au deuxième seuil.

A l'étape 40 (Agrégation du signal), une correction des valeurs I et Q déterminées à l'étape 32 est mise en oeuvre. Pour chaque zone de confiance déterminée à l'étape 38, le module de traitement 12 détermine la moyenne Imoy des valeurs I des pixels de la zone de confiance et détermine la moyenne Qmoy des valeurs Q des pixels de la zone de confiance. Le procédé se poursuit à l'étape 42.

A l'étape 42 ($\Phi$), un retard de phase $\Phi$ est déterminé pour chaque pixel de chaque zone de confiance sur la base des valeurs Imoy et Qmoy. Selon un mode de réalisation, la valeur de retard de phase $\Phi$ est donnée par la relation suivante :

[Math 8]

$$\Phi = \arctan\left(\frac{Qmoy}{Imoy}\right)$$

Le procédé se poursuit à l'étape 44.

A l'étape 44 (d), une valeur de profondeur d est déterminée pour chaque zone de confiance sur la base de la valeur de retard de phase $\Phi$ de la zone de confiance. Selon un mode de réalisation, la distance d à l'objet est donnée par la relation suivante :

[Math 9]

$$d = \frac{1}{2\pi} \cdot \frac{c}{2f_{mod}} \cdot \Phi$$

où c est la vitesse de la lumière.

La distance d déterminée pour chaque pixel fournit l'image de profondeur contenant des taches 50, la couleur de chaque tache 50 dépendant de la profondeur d déterminée à l'étape 44 pour la tache considérée.

La figure 10 est un exemple d'image de profondeur Imp.

Dans des modes de réalisation décrits précédemment, des étapes de procédé peuvent être effectuées en utilisant un ou plusieurs dispositifs de calcul. Les modes de réalisation ne sont pas limités à un fonctionnement avec un type particulier de dispositif de calcul.

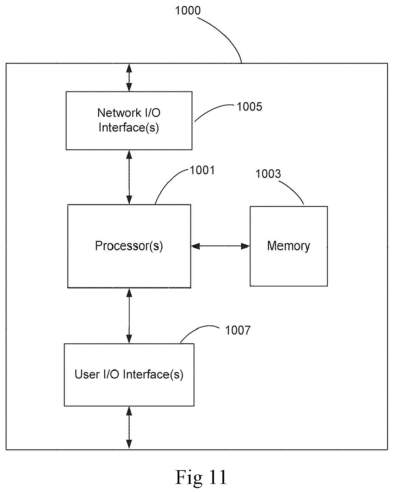

La figure 11 est un schéma-bloc d'un dispositif de calcul 1000 qui peut être utilisé pour réaliser le module de traitement 12 et/ou le module de commande 6. Le dispositif de calcul 1000 peut comprendre un ou plusieurs processeurs 1001 (Processor(s)) et un ou plusieurs supports de stockage non transitoire lisibles par ordinateur (par exemple, la mémoire 1003 (Memory)). La mémoire 1003 peut stocker, dans un moyen de stockage non transitoire lisible par ordinateur, des instructions de programme informatique qui, lorsqu'elles sont exécutées, mettent en oeuvre les étapes du procédé de détection décrit ci-dessus. Le processeur ou les processeurs 1001 peuvent être couplés à la mémoire 1003 et peuvent exécuter ces instructions de programme d'ordinateur pour entraîner la réalisation de ces étapes.

Le dispositif de calcul 1000 peut également comprendre une interface 1005 d'entrée/sortie de réseau (Network I/O Interface(s)) par laquelle le dispositif de calcul peut communiquer avec d'autres dispositifs de calcul (par exemple, sur un réseau), et peut également comprendre une ou plusieurs interfaces d'utilisateur 1007 (User I/O Interface(s)), par l'intermédiaire desquelles le dispositif de calcul peut fournir un signal de sortie à un utilisateur et recevoir un signal d'entrée provenant de l'utilisateur. Les interfaces d'utilisateur peuvent comprendre des périphériques tels qu'un clavier, une souris, un microphone, un périphérique d'affichage (p.ex. un moniteur ou un écran tactile), des hautparleurs, une caméra, et/ou divers autres types de périphérique entrée/sortie.

Les modes de réalisation décrits ci-dessus peuvent être mis en oeuvre de plusieurs façons. A titre d'exemple, les modes de réalisation peuvent être mis en oeuvre à l'aide d'un circuit dédié, d'un logiciel ou d'une combinaison de ceux-ci. Lorsqu'ils sont mis en oeuvre par logiciel, le code logiciel peut être exécuté sur n'importe quel processeur approprié (par exemple, un microprocesseur) ou un ensemble de processeurs, qu'ils soient prévus dans un dispositif de calcul unique ou répartis entre plusieurs dispositifs de calcul. Il convient de noter que tout composant ou ensemble de composants qui réalisent les étapes de procédé décrites ci-dessus peuvent être considérés comme un ou plusieurs contrôleurs qui commandent les étapes décrites ci-dessus. Le contrôleur ou les contrôleurs peuvent être mis en oeuvre de nombreuses façons, par exemple avec un circuit électronique dédié ou avec un circuit à usage général (par exemple, un ou plusieurs processeurs) qui est programmé à l'aide un logiciel ou d'un microcode pour exécuter les étapes de procédé décrites ci-dessus.

À cet égard, il convient de noter qu'un mode de réalisation décrit ici comprend au moins un support de stockage lisible par ordinateur (RAM, ROM, EEPROM, mémoire flash ou une autre technologie de mémoire, CD-ROM, disque numérique polyvalent (DVD) ou un autre support à disque optique, cassette magnétique, bande magnétique, disque de stockage magnétique ou un autre dispositif de stockage magnétique, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les étapes des modes de réalisation décrits ci-dessus. Le support lisible par ordinateur peut être transportable de sorte que le programme stocké sur celuici peut être chargé sur n'importe quel dispositif de calcul pour mettre en oeuvre des aspects des techniques décrites ici. En outre, il convient de noter que la référence à un programme d'ordinateur qui, lorsqu'il est exécuté, effectue l'une des étapes de procédé décrites ci-dessus, ne se limite pas à un programme d'application s'exécutant sur un ordinateur hôte. Au contraire, les termes programme d'ordinateur et logiciel sont utilisés ici dans un sens général pour faire référence à tout type de code informatique (par exemple, un logiciel d'application, un micrologiciel, un microcode, ou toute autre forme d'instruction d'ordinateur) qui peut être utilisé pour programmer un ou plusieurs processeurs pour mettre en oeuvre des aspects des procédés décrits précédemment.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Enfin, la mise en oeuvre pratique des modes de réalisation et variantes décrits est à la portée de la personne du métier à partir des indications fonctionnelles données ci-dessus.

**Revendications**

1. Procédé de détermination d'une image de profondeur (Imp) d'une scène (2), comprenant les étapes suivantes :

    a) projeter un motif de taches (18) sur la scène et acquérir une image de la scène, chaque pixel de l'image étant obtenu à partir de charges électriques accumulées pendant des phases de collecte ;
    b) déterminer les valeurs I et Q des pixels de l'image ;
    c) déterminer, pour chaque pixel de l'image, au moins une valeur de confiance qui est fonction d'au moins une partie des charges accumulées, pour former une image de confiance ou des images de confiance ;
    d) déterminer les maxima locaux de l'image de confiance ou de l'une des images de confiance dont la valeur de confiance, de la même image de confiance ou d'une autre des images de confiance, est supérieure à un premier seuil ;
    e) sélectionner, pour chaque maximum local déterminé à l'étape d), des pixels autour du maximum local dont la valeur de confiance, de l'image de confiance utilisée pour déterminer les maxima locaux ou d'une autre des images de confiance, est supérieure à un deuxième seuil ;
    f) déterminer, pour chaque maximum local déterminé à l'étape d), une valeur Imoy égale à la moyenne des valeurs I des pixels sélectionnés et une valeur Qmoy égale à la moyenne des valeurs Q des pixels sélectionnés ; et
    g) déterminer, pour chaque maximum local, la profondeur du maximum local à partir des valeurs Imoy et Qmoy.

2. Système (1) de détermination d'une image de profondeur (Imp) d'une scène (2), le système étant configuré pour :

    a) projeter un motif de taches (18) sur la scène et acquérir une image de la scène, chaque pixel de l'image étant obtenu à partir de charges électriques accumulées pendant des phases de collecte ;
    b) déterminer les valeurs I et Q des pixels de l'image ;
    c) déterminer, pour chaque pixel de l'image, au moins une valeur de confiance qui est fonction d'au moins une partie des charges accumulées, pour former une image de confiance ou des images de confiance ;
    d) déterminer les maxima locaux de l'image de confiance dont la valeur de confiance, de la même image de confiance ou d'une autre des images de confiance, est supérieure à un premier seuil ;
    e) sélectionner, pour chaque maximum local déterminé à l'étape d), des pixels autour du maximum local dont la valeur de confiance, de l'image de confiance utilisée pour déterminer les maxima locaux ou d'une autre des images de confiance, est supérieure à un deuxième seuil ;
    f) déterminer, pour chaque maximum local déterminé à l'étape d), une valeur Imoy égale à la moyenne des valeurs I des pixels sélectionnés et une valeur Qmoy égale à la moyenne des valeurs Q des pixels sélectionnés ; et
    g) déterminer, pour chaque maximum local, la profondeur du maximum local à partir des valeurs Imoy et Qmoy.

3. Procédé et système selon la revendication 1 ou 2, dans lequel le premier seuil est supérieur strictement au deuxième seuil.

4. Procédé et système selon l'une quelconque des revendications 1 à 3, dans lequel l'étape d) comprend le déplacement d'une première fenêtre (F1) sur l'image de confiance, et, pour chaque position de la première fenêtre sur l'image de confiance, la comparaison de la valeur d'un pixel de l'image de confiance situé dans la première fenêtre et qui n'est pas sur le bord de la première fenêtre, aux valeurs des autres pixels de l'image de confiance situés de la première fenêtre.

5. Procédé et système selon la revendication 4, dans lequel l'étape d) comprend, dans le cas où la valeur dudit pixel est supérieure aux valeurs des autres pixels de l'image de confiance situés de la première fenêtre, la comparaison de la valeur dudit pixel, de la même image de confiance ou d'une autre des images de confiance, au premier seuil.

6. Procédé et système selon l'une quelconque des revendications 1 à 5, dans lequel l'étape e) comprend, pour chaque maximum local, le placement d'une deuxième fenêtre (F2) sur l'image de confiance utilisée pour déterminer les maxima locaux ou sur une autre des images de confiance, la deuxième fenêtre contenant le maximum local, et la comparaison au deuxième seuil de la valeur de chaque pixel de l'image de confiance situé dans la deuxième fenêtre, autre que le maximum local.

7. Procédé et système selon les revendications 4 et 6, dans lequel la deuxième fenêtre (F2) est plus grande que la première fenêtre (F1) ou égale à la première fenêtre (F1).

**8.** Système selon l'une quelconque des revendications 1 à 7, comprenant un dispositif d'illumination (4) de la scène (2) avec le motif de taches (18), et un capteur d'images (10) pour acquérir l'image de la scène.

**9.** Système selon la revendication 8, correspondant à un détecteur de temps de vol indirect.

**10.** Programme d'ordinateur conçu pour mettre en oeuvre le procédé selon l'une quelconque des revendications 1 à 7.

Fig 1

Fig 2

Fig 3

Fig 4

Fig 5

C_conf

F1

Fig 6

C_conf

MaxL

Fig 7

C_conf          MaxL

F2

Fig 8

Fig 9

Fig 10

1000

Network I/O
Interface(s)        1005

1001        1003

Processor(s)    ←→    Memory

User I/O Interface(s)    1007

Fig 11

Europäisches
Patentamt

European
Patent Office

Office européen
des brevets

# RAPPORT DE RECHERCHE EUROPEENNE

Numéro de la demande

**EP 23 20 3406**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2022/161964 A1 (SONY SEMICONDUCTOR SOLUTIONS CORP [JP] ET AL.) 4 août 2022 (2022-08-04) * page 1 * * pages 3-11 * * figures 1-5 * ----- | 1-10 | INV. G01S7/4914 G01S7/493 G01S17/894 |
| A | WO 2022/136137 A1 (SONY SEMICONDUCTOR SOLUTIONS CORP [JP] ET AL.) 30 juin 2022 (2022-06-30) * pages 1, 3-17 * * figures 1-15 * ----- | 1-10 | |

DOMAINES TECHNIQUES
RECHERCHES (IPC)

G01S

Le présent rapport a été établi pour toutes les revendications

| Lieu de la recherche | Date d'achèvement de la recherche | Examinateur |
|---|---|---|
| Munich | 22 février 2024 | Kruck, Peter |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)

**EP 4 361 672 A1**

## ANNEXE AU RAPPORT DE RECHERCHE EUROPEENNE
## RELATIF A LA DEMANDE DE BREVET EUROPEEN NO.

**EP 23 20 3406**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**22-02-2024**

| Document brevet cité au rapport de recherche | Date de publication | Membre(s) de la famille de brevet(s) | Date de publication |
|---|---|---|---|
| WO 2022161964 A1 | 04-08-2022 | CN 116745646 A | 12-09-2023 |
| | | EP 4285154 A1 | 06-12-2023 |
| | | WO 2022161964 A1 | 04-08-2022 |
| WO 2022136137 A1 | 30-06-2022 | EP 4267987 A1 | 01-11-2023 |
| | | US 2024061123 A1 | 22-02-2024 |
| | | WO 2022136137 A1 | 30-06-2022 |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* FR 2211205

**Littérature non-brevet citée dans la description**

* **R. LANGE ; P. SEITZ.** Solid-state TOF range caméra. *IEEE J. on Quantum Electronics,* Mars 2001, vol. 37 (3